# EUROPEAN PATENT SPECIFICATION

(11) **EP 2 086 836 B1**
(45) Date of publication and mention of the grant of the patent: **21.11.2012**
(21) Application number: 06851772.1
(22) Date of filing: 28.11.2006
(51) Int. Cl.: B64G 1/10, B64G 1/40

(54) **SYSTEMS AND METHODS FOR REFUELING SPACECRAFT**
SYSTEME UND VERFAHREN ZUM BETANKEN VON RAUMFAHRZEUGEN
SYSTEMES ET PROCEDES DE REAPPROVISIONNEMENT EN CARBURANT D'UN VAISSEAU SPATIAL

(43) Date of publication of application: 12.08.2009
(60) Divisional application: 12164864.6
(73) Proprietor: The Boeing Company, Chicago, IL 60606-1596 (US)
(72) Inventor: CHRISTY, Craig A., Seal Beach, California 90740 (US)
(74) Representative: Witte, Weller & Partner
(86) International application number: PCT/US2006/045561
(87) International publication number: WO 2008/066512

(56) References cited:
- US-A- 4 743 278
- US-A- 4 932 688
- US-A- 4 932 688
- US-A- 5 961 074
- US-A- 5 961 074
- DAVID J. CHATO: "Technologies for Refuelling Spacecraft On-Orbit", SPACE 2000 CONFERENCE AND EXPOSITION, November 2000 (2000-11), XP002629802,

## Description

### STATEMENT REGARDING FEDERALLY SPONSORED RESEARCH

This invention was made with Government support under Agreement No. MDA972-00-9-0015 awarded by DARPA. The Government has certain rights in the invention.

### TECHNICAL FIELD

The following disclosure relates generally to systems and methods for transferring propellant between two spacecraft and, more particularly, to on-orbit satellite refueling.

### BACKGROUND

Communication satellites typically have on-board propulsion systems for achieving and maintaining orbit. The propulsion system can include both mono-propellant rocket thrusters (i.e., thrusters that use a single type of propellant, such as hydrazine) and bi-propellant thrusters (i.e., thrusters that use two types of propellant, such as a fuel (e.g., monomethylhydrazine ("MMH")) and an oxidizer (e.g., nitrogen tetroxide ("NTO")). Regardless of the type of propellant used, without propellant the satellite cannot maintain its orbit indefinitely, and will eventually reenter the earth's atmosphere.

One method of on-orbit satellite refueling that has been proposed includes docking a "servicing" satellite to an orbiting "client" satellite in need of propellant. During the docking procedure, a first propellant line from a supply tank on the servicing satellite is releasably connected to a second propellant line leading to the propellant tank on the client satellite. The propellant from the supply tank is then transferred to the client tank via the mated propellant lines. Once the fuel transfer is complete, the two spacecraft separate. As the spacecraft separate, the two propellant lines automatically disconnect. Document US4932688, which is considered to be the closest prior art, shows such a method.

In most cases, there is no physical separation in bi-propellant tanks between the liquid propellant and the pressurant or "ullage" gas. As a result, the ullage typically includes some liquid fuel vapor. One problem with the refueling method described above is that, as the client tank is filled, the ullage in the client tank vents to space. Venting this fuel-laced pressurant to space in close proximity to the client and servicing satellites can contaminate and damage solar panels and/or other sensitive equipment on the satellites.

### SUMMARY

The following summary is provided for the benefit of the reader only, and is not intended to limited the invention as forth by the claims in any way.

The invention is directed generally toward systems and methods for refueling spacecraft. A not claimed method for transferring propellant from a first spacecraft to a second spacecraft in accordance with one aspect of the invention includes releasably connecting a first propellant conduit carried by the first spacecraft to a second propellant conduit carried by the second spacecraft, and releasably connecting a first ullage conduit carried by the first spacecraft to a second ullage conduit carried by the second spacecraft. The method further includes transferring propellant from the first spacecraft to the second spacecraft via the first and second propellant conduits, and transferring ullage from the second spacecraft to the first spacecraft via the first and second ullage conduits. In one embodiment, transferring propellant from the first spacecraft to the second spacecraft can include transferring propellant from a first propellant tank carried by the first spacecraft to a second propellant tank carried by the second spacecraft, and transferring ullage from the second spacecraft to the first spacecraft can include transferring ullage from the second propellant tank to the first propellant tank.

A method of refueling spacecraft, according to claim 1, in accordance with another aspect of the invention includes releasably coupling a first spacecraft to a second spacecraft, and transferring propellant from a first tank carried by the first spacecraft to a second tank carried by the second spacecraft. The method further includes transferring ullage from the second tank to the first tank while transferring the propellant from the first tank to the second tank.

A propellant supply spacecraft, according to claim 6, configured in accordance with a further aspect of the invention includes a first propellant tank and a spacecraft refueling interface. The first propellant tank includes a propellant outlet and an ullage inlet. The refueling interface includes a first propellant transfer coupling in fluid communication with the propellant outlet, and a first ullage transfer coupling in fluid communication with the ullage inlet. The first propellant transferring coupling is configured to be releasably connected to a second propellant transfer coupling carried by a client spacecraft so that propellant from the first propellant tank can flow into the second propellant tank. The first ullage transfer coupling is configured to be releasably connected to a second ullage transfer coupling carried by the second spacecraft so that ullage from the second propellant tank can flow into the first propellant tank while the propellant is flowing from the first propellant tank into the second propellant tank.

### BRIEF DESCRIPTION OF THE DRAWINGS

Figure 1 is a partially schematic diagram of a spacecraft refueling system configured in accordance with an embodiment of the invention.

Figure 2 is a flow diagram illustrating a routine for refueling a spacecraft in accordance with an embodiment of the invention.

Figure 3 is a partially schematic diagram of a spacecraft refueling system configured in accordance with another embodiment of the invention.

### DETAILED DESCRIPTION

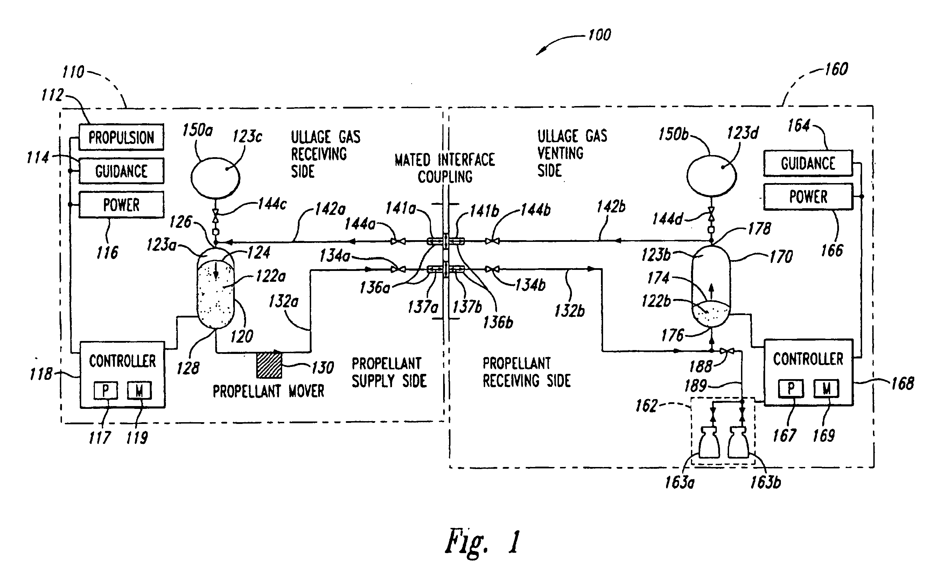

The following disclosure describes various methods and systems for refueling spacecraft. Certain details are set forth in the following description and in Figures 1-3 to provide a thorough understanding of various embodiments of the invention. Other details describing well-known structures and systems often associated with satellites and other spacecraft, and spacecraft propulsion systems and propellants, are not set forth in the following disclosure to avoid unnecessarily obscuring the description of the various embodiments of the invention.

Many of the details, dimensions, angles and other features shown in the Figures are merely illustrative of particular embodiments of the invention. Accordingly, other embodiments can have other details, dimensions, angles and features without departing from the scope of the present invention. In addition, further embodiments of the invention can be practiced without several of the details described below.

In the Figures, identical reference numbers identify identical, or at least generally similar, elements. To facilitate the discussion of any particular element, the most significant digit or digits of any reference number refer to the Figure in which that element is first introduced. For example, element 110 is first introduced and discussed with reference to Figure 1.

Figure 1 is a partially schematic diagram of a spacecraft refueling system 100 configured in accordance with an embodiment of the invention. The spacecraft refueling system 100 includes a propellant supply spacecraft 110 and a propellant receiving spacecraft 160. For ease of reference, the propellant supply spacecraft 110 is referred to below as the "supply spacecraft 1 10," and the propellant receiving spacecraft 160 is referred to below as the "client spacecraft 160." In the illustrated embodiment, the client spacecraft 160 can be an orbiting satellite, such as a research satellite, a communication satellite, a weather satellite, a navigational satellite, etc., having a mono-propellant propulsion system. The supply spacecraft 110 can be another satellite or spacecraft that has docked with the client spacecraft 160 for the purpose of refueling the client spacecraft 160.

As described in greater detail below, the supply spacecraft 110 can refuel the client spacecraft 160 by flowing propellant from a supply tank 120 to a receiving tank 170, while simultaneously flowing pressurant or "ullage" from the receiving tank 170 back into the supply tank 120. Transferring propellant in a closed-loop system such as this avoids venting fuel-rich ullage to space in close proximity to the supply spacecraft 1 10 and the client spacecraft 160, which could damage solar panels and/or other critical surfaces and equipment on the spacecraft. A further advantage of this approach is that it recycles the ullage from the receiving tank 170 and uses it to replenish the supply tank 120, thereby reducing the amount of stored ullage that needs to be carried aloft by the supply spacecraft 110. These and other aspects of the refueling system 100 are described in greater detail below with reference to Figures 1- 3.

The supply spacecraft 110 can include a propulsion system 112 (e.g., a mono- propellant and/or bi-propellant propulsion system), a guidance system 114, and an on-board power system 116 (e.g., batteries, solar panels, etc.). These systems can be at least generally similar in structure and function to conventional spacecraft systems known in the art. In addition, the supply spacecraft 110 can also include a spacecraft controller 118. The controller 118 can include a processor 117 configured to execute computer-readable instructions stored in memory 119. The computer-readable instructions enable the controller 118 to control the propulsion system 112, the guidance system 114, and the power system 116. The computer-readable instructions also enable the controller 118 to control refueling operations associated with the propellant supply tank 120 (the "supply tank 120").

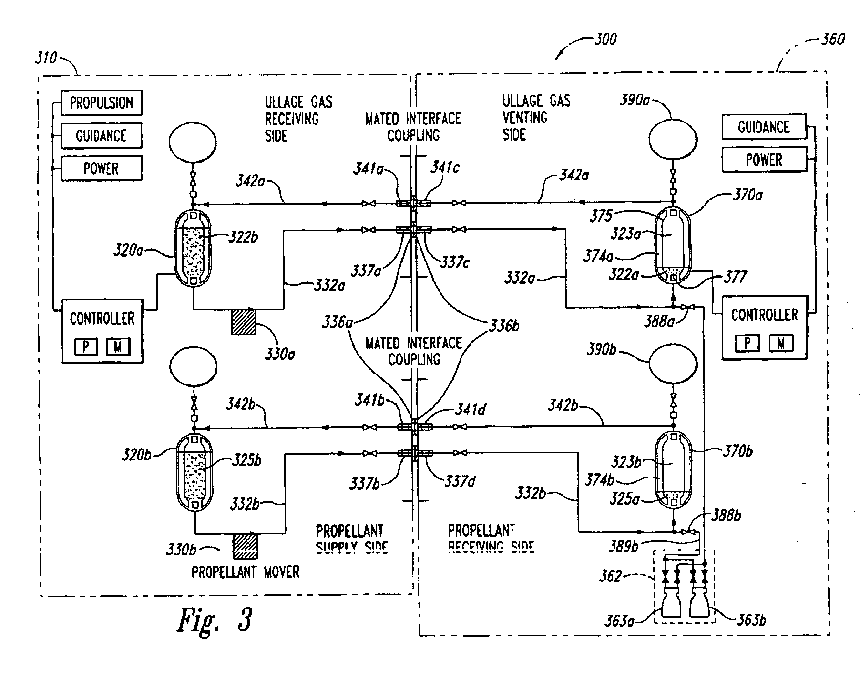

The supply tank 120 carries a propellant 122 (identified as a first propellant portion 122a) suitable for use with monopropellant propulsion systems. Such propellants can include hydrazine, hydrogen peroxide, and/or other suitable monopropellants known in the art. The supply tank 120 can include a propellant management device (PMD) 124 to separate the propellant 122a from a pressurant or ullage 123 (identified as a first ullage portion 123a). Suitable ullages can include, for example, gaseous nitrogen (N₂), helium (He), etc. The PMD 124 can include a bladder, diaphragm, or other suitable positive expulsion device known in the art. In addition, in other embodiments, the PMD 124 can include other types of PMD devices known in the art, depending on the type of propellant being used. For example, as described in detail below with reference to Figure 3, in some embodiments surface tension type PMD devices, such as a screen or vane type PMD, can be used.

The supply spacecraft 120 can also include a first refueling interface 136a having a first propellant coupling 137a and a first ullage coupling 141a. The client spacecraft 160 can include a corresponding second refueling interface 136b having a second propellant coupling 137b and a second ullage coupling 141b. The first propellant coupling 137a is configured to releasably engage the second propellant coupling 137b, and the first ullage coupling 141 a is configured to releasably engage the second ullage coupling 141 b, when the first refueling interface 136a mates to the second refueling interface 136b. For this purpose, the propellant couplings 137, and the ullage couplings 141, can include various types of "quick-disconnect" fittings known in the art for releasably connecting fluid conduits together.

A first propellant transfer conduit 132a operably extends from a propellant outlet 128 on the supply tank 120 to the first propellant coupling 137a on the first refueling interface 136a. For ease of reference, the first propellant transfer conduit 132a is referred to below as the "first propellant line 132a." The PMD 124 helps keep the propellant 122a over the propellant outlet 128 at all times. A propellant mover 130 (e.g., a pump, such as an electrically driven mechanical pump, etc.) can facilitate movement of the propellant 122a through the first propellant line 132a when a first propellant valve 134a is open.

A first ullage transfer conduit 142a operably extends from the first ullage coupling 141 a on the first refueling interface 136a to an ullage inlet 126 on the supply tank 120. For ease of reference, the first ullage transfer conduit 142a is referred to below as the "first ullage line 142a." A first ullage valve 144a controls the flow of ullage through the first ullage line 142a. A first ullage storage tank 150a carries a portion of the ullage 123 (identified as a third ullage portion 123c). A third ullage valve 144c controls the flow of ullage from the storage tank 150a to the ullage inlet 126 if needed to supplement the ullage 123a in the supply tank 120 during, for example, the refueling procedures discussed in detail below.

The client spacecraft 160 can include a propulsion system 162, a guidance system 164, and an on-board power system 166. The propulsion system 162 can include one or more mono-propellant thrusters 163 (illustrated individually as a first thruster 163a and a second thruster 163b). The client spacecraft 160 can further include a spacecraft controller 168. The controller 168 can include a processor 167 configured to execute computer-readable instructions stored in memory 169. The computer-readable instructions enable the controller 168 to control the propulsion system 162, the guidance system 164, and the power system 166. The computer-readable instructions also enable the controller 168 to control refueling operations associated with the propellant receiving tank 170. For ease of reference, the propellant receiving tank 170 is referred to below as the "client tank 170."

In the illustrated embodiment, the client tank 170 carries a portion of the propellant 122 (identified as a second propellant portion 122b) and a portion of the ullage 123 (identified as a second ullage portion 123b). A PMD 174 separates the ullage 123b from the propellant 122b. The PMD 174 can be at least generally similar in structure and function to the PMD 124 on the supply spacecraft 110. A second propellant transfer conduit 132b operably extends from the second propellant coupling 137b on the second refueling interface 136b to a propellant inlet 176 on the client tank 170. For ease of reference, the second propellant transfer conduit 132b is referred to below as the "second propellant line 132b." A second propellant transfer valve 134b controls the flow of propellant through the second propellant line 136b.

A second ullage transfer conduit 142b operably extends from an ullage outlet 178 on the client tank 170 to the second ullage coupling 141b on the second refueling interface 136b. For ease of reference, the second ullage transfer conduit 142b is referred to below as the "second ullage line 142b." The PMD 174 helps keep the propellant 122b away from the ullage outlet 178 at all times. A second ullage valve 144b controls the flow of ullage through the second ullage line 142b. A second ullage storage tank 150b carries a portion of the ullage 123 (identified as a fourth ullage portion 123d). A fourth ullage valve 144d controls the flow of ullage from the storage tank 150b to the supply tank 170 during, for example, operation of the propulsion system 162.

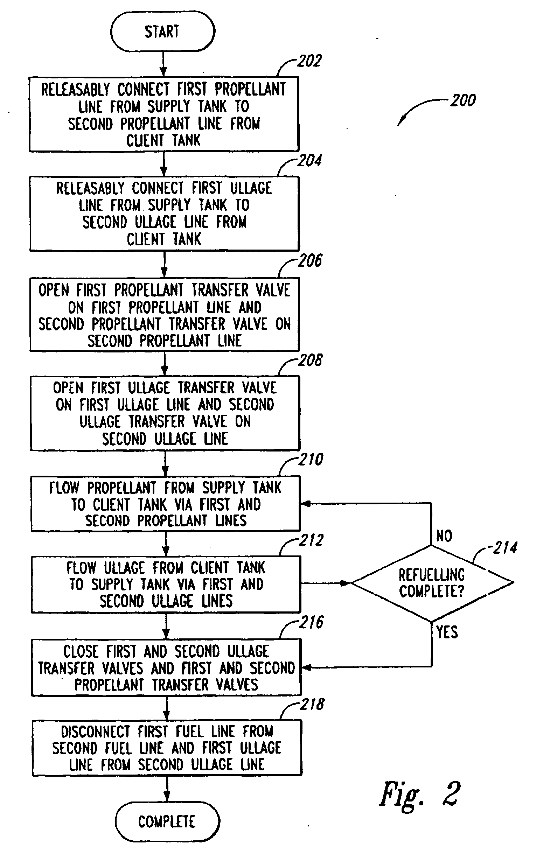

Figure 2 is a flow diagram of a routine 200 for refueling a spacecraft in accordance with an embodiment of the invention. For purposes of illustration, the routine 200 is described below with reference to the spacecraft refueling system 100 of Figure 1. For example, in one embodiment, the supply-side controller 118 can implement those portions of the routine 200 carried out by the supply spacecraft 110, and the receive-side controller 168 can implement those portions of the routine 200 carried out by the client spacecraft 160. In other embodiments, however, various portions of the routine 200 can be implemented by other processing devices residing wholly or in part on one or both of the supply spacecraft 110 and/or the client spacecraft 160. Furthermore, the routine 200 can also be employed by other spacecraft refueling systems. For example, the routine 200 can be employed by other mono-propellant and/or bi-propellant refueling systems (such as the bi-propellant refueling system described below with reference to Figure 3).

Referring to Figures 1 and 2 together, in block 202, the first propellant line 132a is releasably connected to the second propellant line 132b. In one embodiment, the propellant lines 132 can be automatically connected together when the first refueling interface 136a on the supply spacecraft 110 is mated to the second refueling interface 136b on the client spacecraft 160. As the two interfaces come together, the first propellant coupling 137a can be releasably engaged with the second propellant coupling 137b. As discussed above, the propellant couplings 137 can include suitable quick disconnects known in the art for this purpose. In block 204, the first ullage line 142a is releasably connected to the second ullage line 142b. As with the propellant lines 132, the first ullage coupling 141 a can be releasably engaged with the second ullage coupling 141 b as the first refueling interface 136a is mated to the second refueling interface 136b.

In block 206, the first propellant transfer valve 134a on the first propellant line 132a, and the second propellant transfer valve 134b on the second propellant line 132b, are opened. In block 208, the first ullage transfer valve 144a on the first ullage line 142a, and the second ullage transfer valve 144b on the second ullage line 142b, are opened. In block 210, the propellant 122a from the supply tank 120 flows into the client tank 170 via the propellant lines 132. The propellant mover 130 facilitates movement of the propellant 122a from the supply tank 120 to the client tank 170. As the propellant 122a flows into the client tank 170, the displaced ullage 123b flows out of the client tank 170 and into the supply tank 120 via the ullage lines 142.

In decision block 214, the routine determines if refueling is complete. This can occur when the client tank 170 is at least approximately full of the propellant 122. If refueling is not complete, the routine returns to block 210 and repeats. When refueling is complete, the routine proceeds to block 216. In block 216, the first and second propellant transfer valves 134a,b, and the first and second ullage transfer valves 144a,b, are closed. In block 218, the first refueling interface 136a separates from the second refueling interface 136b. As the two interfaces move away from each other, the first propellant coupling 136a disengages from the second propellant coupling 137b, and the first ullage coupling 141a disengages from the second ullage coupling 141b, thereby disconnecting the first fuel line 132a from the second fuel line 132b, and the first ullage line 142a from the second ullage line 142b. After block 218, the routine is complete.

Once the supply spacecraft 110 has moved away from the client spacecraft 160 in an appropriate separation maneuver, the client spacecraft 160 can operate the thrusters 163 as needed to maintain proper orbit. To operate the thrusters 163, a thruster valve 188 is opened allowing the propellant 122b to flow from the client tank 170 to the thrusters 163. As the propellant 122b flows out of the client tank 170, the fourth ullage valve 144d is opened to allow the ullage 123d to flow into the client tank 170 and pressurize the propellant 122b.

Figure 3 is a partially schematic diagram of a spacecraft refueling system 300 configured in accordance with another embodiment of the invention. The spacecraft refueling system 300 includes a supply spacecraft 310 and a client spacecraft 360. Many components and features of the supply spacecraft 310 and the client spacecraft 360 can be at least generally similar in structure and function to corresponding features of the supply spacecraft 110 and the client spacecraft 160, respectively, described in detail above with reference to Figures 1 and 2. In the embodiment of Figure 3, however, the client spacecraft 360 includes a bipropellant propulsion system 362 having a first thruster 363a and a second thruster 363b. The bipropellant propulsion system 362 can use a first propellant, such as a fuel 322 (identified as a first fuel portion 322a) carried by a first client tank 370a, and a second propellant, such as an oxidizer 325 (identified as a first oxidizer portion 325a) carried by a second client tank 370b. The fuel 322a can include monomethyl hydrazine (MMH), liquid hydrogen, RP1, etc. The oxidizer 325a can include nitrogen tetroxide (NTO), liquid oxygen, etc. Because of the potentially aggressive nature of these propellants, the first propellant tank 370a and the second propellant tank 370b can include surface-tension type PMDs 374 (identified individually as a first PMD 374a and a second PMD 374b). Each of the PMDs 374 can include a plurality of screen/vanes 375 and one or more baffle systems 377 for collecting the propellant. In the first client tank 370a, the PMD 374a keeps the fuel 322a separate from an ullage 323 (identified individually as a first ullage portion 323a). In the second client tank 370b, the PMD 374b keeps the oxidizer 325a separate from a second portion of the ullage 323 (identified as a second ullage portion 323b).

To accommodate the two types of propellant used by the client spacecraft 360, the supply spacecraft 310 includes a first supply tank 320a and a second supply tank 320b. The first supply tank 320a carries a portion of the fuel 322 (identified as a second fuel portion 322b) for refueling the first client tank 370a. Similarly, the second supply tank 320b carries a portion of the oxidizer 325 (identified as a second oxidizer portion 325b) for replenishing the oxidizer in the second client tank 370b.

To refuel the client spacecraft 360 with the supply spacecraft 310, a first refueling interface 336a on the supply spacecraft 310 is releasably mated to a second refueling interface 336b on the client spacecraft 360. In this embodiment, the first refueling interface 336a includes a first propellant coupling 337a in fluid communication with the first supply tank 320a, and a second propellant coupling 337b in fluid communication with the second supply tank 320b. The first refueling interface 336a also includes a first ullage coupling 341 a in fluid communication with the first supply tank 320a and, a second ullage coupling 341 b in fluid communication with the second supply tank 320b. Similarly, the second refueling interface 336b on the client spacecraft 360 includes a third propellant coupling 337c and a third ullage coupling 341 c in fluid communication with the first client tank 370a, and a fourth propellant coupling 337d and a fourth ullage coupling 341d in fluid communication with the second client tank 370b. During the refueling process, the fuel 322b flows from the first supply tank 320a to the first client tank 370a via a first propellant line 332a. As the fuel flows into the first client tank 370a, the ullage 323a flows out of the client tank 370a and into the first supply tank 320a via a first ullage line 342a in a closed-loop manner as described above with reference to Figures 1 and 2. A first propellant mover 330a (e.g., an electrically-driven mechanical pump) facilitates the flow of the fuel 322b through the first propellant line 332a. The oxidizer 325b flows from the second supply tank 320b to the second client tank 370b via a second propellant line 332b. A second propellant mover 330b can facilitate the flow of the oxidizer 325b through the second propellant line 332b. As the oxidizer 325b flows into the second client tank 370b, the ullage 323b flows out of the second client tank 370b and into the second supply tank 320b via a second ullage line 342b.

Once the refueling process is complete, the first refueling interface 336a is disengaged from the second refueling interface 336b and the supply spacecraft 310 separates from the client spacecraft 360 in a suitable separation maneuver. The client spacecraft 360 can then operate the bipropellant propulsion system 362 by opening a first thruster valve 388a to flow the fuel 322a from the first client tank 370a, and opening a second thruster value 388b to flow the oxidizer 325a from the second client tank 370b. As the fuel 322a flows out of the first client tank 370a, ullage from a first storage tank 390a can flow into the first client tank 370a to maintain fuel pressure. Similarly, as the oxidizer 325a flows out of the second client tank 370b, ullage from a second storage tank 390b can flow into the second client tank 370b to maintain oxidizer pressure.

From the foregoing, it will be appreciated that specific embodiments of the invention have been described herein for purposes of illustration, but that various modifications may be made without deviating from the scope of the various embodiments of the invention. Further, while various advantages associated with certain embodiments of the invention have been described above in the context of those embodiments, other embodiments may also exhibit such advantages, and not all embodiments need necessarily exhibit such advantages to fall within the scope of the invention. Accordingly, the invention is not limited, except as by the appended claims.

## Claims

1. A method of refueling spacecraft(160; 360), the method comprising:
releasably coupling a first spacecraft (110; 310) to a second spacecraft (160; 360);
transferring propellant (122; 322) from a first tank (120; 320a, b) carried by the first spacecraft (110) to a second tank (170; 370a, b) carried by the second spacecraft (160); and
while transferring the propellant (123) from the first tank (120) to the second tank (170), transferring ullage (123; 323) from the second tank (170) to the first tank (120).

2. The method of claim 1 wherein the propellant (122) is a first propellant (122a) and the ullage (123) is a first ullage (123a), and wherein the method further comprises:
transferring a second propellant (122b) from a third tank carried by the first spacecraft (110; 310)) to a fourth tank carried by the second spacecraft (160; 360)); and
while transferring the second propellant (122b) from the third tank to the fourth tank, transferring a second ullage (123b) from the fourth tank to the third tank.

3. The method of claim 1 wherein transferring the propellant (122) from the first tank (120) to the second tank (170) includes pumping the propellant (122) into the second tank (170) while maintaining an at least approximately constant pressure in the first and second tanks (120, 170).

4. The method of claim 1:
wherein releasably coupling a first spacecraft (110) to a second spacecraft (160) includes releasably connecting a first propellant coupling (137a) on the first spacecraft (110) to a second propellant coupling (137b) on the second spacecraft (160), and releasably connecting a first ullage coupling (141a) on the first spacecraft (110) to a second ullage coupling (141b) on the second spacecraft (160);
wherein transferring propellant (122) from a first tank (120) carried by the first spacecraft (110) to a second tank (170) carried by the second spacecraft (160) includes flowing the propellant (122) through the first and second propellant couplings (137a, b);
wherein transferring ullage (123) from the second tank (170) to the first tank (120) includes flowing the ullage (123) through the first and second ullage couplings (141a, b); and
wherein the method further comprises uncoupling the first spacecraft (110) from the second spacecraft (160).

5. A spacecraft refueling system (100) comprising:
means for releasably coupling a first spacecraft (110) to a second spacecraft (160);
means for transferring propellant (122) from a first tank (120) carried by the first spacecraft (110) to a second tank (170) carried by the second spacecraft (160); and
and means for transferring ullage (123) from the second tank (170) to the first tank (120) while transferring the propellant (122) from the first tank (120) to the second tank (170).

6. The spacecraft refueling system of claim 5 wherein the means for releasably coupling the first spacecraft (110) to the second spacecraft (160) include:
means for releasably connecting a propellant outlet (128) in fluid communication with the first tank (120) to a propellant inlet (126) in fluid communication with the second tank (170); and
means for releasably connecting an ullage outlet in fluid communication with the second tank (170) to an ullage inlet (126) in fluid communication with the first tank (120).

## Patentansprüche

1. Ein Verfahren zum Auftanken eines Raumfahrzeugs (160; 360), wobei das Verfahren aufweist:
lösbares Koppeln eines ersten Raumfahrzeugs (110; 310) an ein zweites Raumfahrzeug (160; 360);
Transferieren von Treibstoff (122; 322) von einem ersten Tank (120; 320a, b), von dem ersten Raumfahrzeug (110) getragen wird, zu einem zweiten Tank (170; 370a, b), der von dem zweiten Raumfahrzeug (160) getragen wird; und
während der Treibstoff (123) vom ersten Tank (120) in den zweiten Tank (170) transferiert wird, Transferieren eines Schwunds (123; 323) von dem zweiten Tank (170) in den ersten Tank (120).

2. Ein Verfahren nach Anspruch 1, wobei der Treibstoff (122) ein erster Treibstoff (122a) ist und der Schwund (123) ein erster Schwund (123a) ist, und wobei das Verfahren des Weiteren aufweist:
Transferieren eines zweiten Treibstoffs (122b) von einem dritten Tank, der von dem ersten Raumfahrzeug (110; 310) getragen wird, in einen vierten Tank, der von dem zweiten Raumfahrzeug (160; 360) getragen wird; und
während der zweite Treibstoff (122b) aus dem dritten Tank in den vierten Tank transferiert wird, Transferieren eines zweiten Schwunds (123b) vom vierten Tank in den dritten Tank.

3. Verfahren nach Anspruch 1, wobei das Transferieren des Treibstoffs (122) aus dem ersten Tank (120) in den zweiten Tank (170) ein Pumpen des Treibstoffs (122) in den zweiten Tank (170) aufweist, während ein zumindest annähernd konstanter Druck in dem ersten Tank (120) und dem zweiten Tank (170) beibehalten wird.

4. Verfahren nach Anspruch 1:
wobei das lösbare Koppeln des ersten Raumfahrzeugs (110) an das zweite Raumfahrzeug (160) ein lösbares Verbinden einer ersten Treibstoffkupplung (137a) am ersten Raumfahrzeug (110) an eine zweite Treibstoffkupplung (137b) am zweiten Raumfahrzeug (160) sowie ein lösbares Verbinden einer ersten Schwundkupplung (141a) am ersten Raumfahrzeug (110) mit einer zweiten Schwundkupplung (141 b) am zweiten Raumfahrzeug (160) aufweist;
wobei das Transferieren des Treibstoffs (122) von einem ersten Tank (120), der von dem ersten Raumfahrzeug (110) getragen wird, an einen zweiten Tank (170), der von dem zweiten Raumfahrzeug (160) getragen wird, ein Strömen des Treibstoffs (122) durch die erste Treibstoffkupplung (137a) und durch die zweite Treibstoffkupplung (137b) aufweist;
wobei das Transferieren des Schwunds (123) aus dem zweiten Tank (170) in den ersten Tank (120) ein Strömen des Schwunds (123) durch die erste Schwundkupplung (141 a) und durch die zweite Schwundkupplung (141b) aufweist; und
wobei das Verfahren des Weiteren ein Entkoppeln des ersten Raumfahrzeugs (110) vom zweiten Raumfahrzeug (160) aufweist.

5. Raumfahrzeug-Auftanksystem (100), das aufweist:
Mittel zum lösbaren Koppeln eines ersten Raumfahrzeugs (110) an ein zweites Raumfahrzeug (160);
Mittel zum Transferieren von Treibstoff (122) aus einem ersten Tank (120), der von dem ersten Raumfahrzeug (110) getragen wird, an einen zweiten Tank (170), der von dem zweiten Raumfahrzeug (160) getragen wird; und
Mittel zum Transferieren von Schwund (123) vom zweiten Tank (170) zum ersten Tank (120), während der Treibstoff (122) vom ersten Tank (120) in den zweiten Tank (170) transferiert wird.

6. Raumfahrzeug-Auftanksystem nach Anspruch 5, wobei die Mittel zum lösbaren Koppeln des ersten Raumfahrzeugs (110) an das zweite Raumfahrzeug (160) aufweisen:
Mittel zum lösbaren Verbinden eines Treibstoffauslasses (128), der in fluidischer Verbindung mit dem ersten Tank (120) steht, mit einem Treibstoffeinlass (126), der in fluidischer Verbindung mit dem zweiten Tank (170) steht; und
Mittel zum lösbaren Verbinden eines Schwundauslasses, der in fluidischer Verbindung mit dem zweiten Tank (170) steht, mit einem Schwundeinlass (126), der in fluidischer Verbindung mit dem ersten Tank (120) steht.

## Revendications

1. Procédé de réapprovisionnement en carburant d'un vaisseau spatial (160 ; 360), le procédé comprenant :
l'accouplement détachable d'un premier vaisseau spatial (110 ; 310) à un deuxième vaisseau spatial (160 ; 360) ;
le transfert d'agent propulseur (122 ; 322) depuis un premier réservoir (120 ; 320a, b) porté par le premier vaisseau spatial (110) à un deuxième réservoir (170 ; 370a, b) porté par le deuxième vaisseau spatial (160) ; et
pendant le transfert de l'agent propulseur (123) du premier réservoir (120) au deuxième réservoir (170), le transfert de l'espace vide de remplissage (123 ; 323) du deuxième réservoir (170) au premier réservoir (120).

2. Procédé selon la revendication 1, dans lequel l'agent propulseur (122) est un premier agent propulseur (122a) et l'espace vide de remplissage (123) est un premier espace vide de remplissage (123a), et dans lequel le procédé comprend en outre :
le transfert d'un deuxième agent propulseur (122b) depuis un troisième réservoir porté par le premier vaisseau spatial (110 ; 310) à un quatrième réservoir porté par le deuxième vaisseau spatial (160 ; 360) ; et
pendant le transfert du deuxième agent propulseur (122b) du troisième réservoir au quatrième réservoir, le transfert d'un deuxième espace vide de remplissage (123b) du quatrième réservoir au troisième réservoir.

3. Procédé selon la revendication 1, dans lequel le transfert de l'agent propulseur (122) du premier réservoir (120) au deuxième réservoir (170) comporte le pompage de l'agent propulseur (122) dans le deuxième réservoir (170) tout en maintenant une pression au moins approximativement constante dans les premier et deuxième réservoirs (120, 170).

4. Procédé selon la revendication 1, dans lequel
l'accouplement détachable d'un premier vaisseau spatial (110) à un deuxième vaisseau spatial (160) inclut la connexion détachable d'un premier raccord d'agent propulseur (137a) sur le premier vaisseau spatial (110) à un deuxième raccord d'agent propulseur (137b) sur le deuxième vaisseau spatial (160), et la connexion détachable d'un premier raccord d'espace vide de remplissage (141a) sur le premier vaisseau spatial (110) à un deuxième raccord d'espace vide de remplissage (141b) sur le deuxième vaisseau spatial (160) ;
le transfert d'agent propulseur (122) d'un premier réservoir (120) porté par le premier vaisseau spatial (110) à un deuxième réservoir (170) porté par le deuxième vaisseau spatial (160) comporte l'écoulement de l'agent propulseur (122) à travers les premier et deuxième raccords d'agent propulseur (137a, b) ;
le transfert de l'espace vide de remplissage (123) du deuxième réservoir (170) au premier réservoir (120) comporte l'écoulement de l'espace vide de remplissage (123) à travers les premier et deuxième raccords d'espace vide de remplissage (141a, b) ; et le procédé comprend en outre le désaccouplement du premier vaisseau spatial (110) du deuxième vaisseau spatial (160).

5. Système de réapprovisionnement en carburant d'un vaisseau spatial (100), comprenant :
des moyens pour accoupler de manière détachable un premier vaisseau spatial (110) à un deuxième vaisseau spatial (160) ;
des moyens pour transférer de l'agent propulseur (122) d'un premier réservoir (120) porté par le premier vaisseau spatial (110) à un deuxième réservoir (170) porté par le deuxième vaisseau spatial (160) ; et
des moyens pour transférer l'espace vide de remplissage (123) du deuxième réservoir (170) au premier réservoir (120) pendant le transfert de l'agent propulseur (122) du premier réservoir (120) au deuxième réservoir (170).

6. Système de réapprovisionnement en carburant d'un vaisseau spatial selon la revendication 5, dans lequel les moyens pour accoupler de manière détachable le premier vaisseau spatial (110) au deuxième vaisseau spatial (160) comportent :
un moyen pour connecter de manière détachable une sortie d'agent propulseur (128) en communication fluidique avec le premier réservoir (120) à une entrée d'agent propulseur (126) en communication fluidique avec le deuxième réservoir (170) ; et
un moyen pour connecter de manière détachable une sortie d'espace vide de remplissage en communication fluidique avec le deuxième réservoir (170) à une entrée d'espace vide de remplissage (126) en communication fluidique avec le premier réservoir (120).
